## Europäisches Patentamt
## European Patent Office
## Office européen des brevets

(19)

(11) Publication number: **0 106 420**
**B1**

(12) **EUROPEAN PATENT SPECIFICATION**

(45) Date of publication of patent specification: **11.03.87**

(21) Application number: **83301579.5**

(22) Date of filing: **22.03.83**

(51) Int. Cl.⁴: **A 01 D 23/02**

(54) **Root crop topping assembly.**

(30) Priority: **26.03.82 GB 8208929**
**29.11.82 GB 8233957**

(43) Date of publication of application:
**25.04.84 Bulletin 84/17**

(45) Publication of the grant of the patent:
**11.03.87 Bulletin 87/11**

(84) Designated Contracting States:
**BE DE FR NL**

(56) References cited:
**DD-A- 9 739**
**FR-A-1 289 707**
**GB-A- 990 568**
**GB-A-2 100 108**

(73) Proprietor: **NATIONAL RESEARCH DEVELOPMENT CORPORATION**
**101 Newington Causeway**
**London SE1 6BU (GB)**

(72) Inventor: **Butler, John**
**34 Willow Way**
**Flitwick Bedford (GB)**

(74) Representative: **Trevor-Briscoe, David William**
**Patent Department**
**National Research Development Corporation**
**101 Newington Causeway**
**London SE1 6BU (GB)**

Courier Press, Leamington Spa, England.

## Description

The present invention relates to a root crop topping assembly, to root crop harvesters incorporating said assembly and to rotary devices for use in such an assembly.

DD—A—9739 discloses a device for removing potato foliage. The device comprises a pronged cowl and rotating foliage rippers which interact with the cowl on the scissor principle. The cowl and rippers are both shaped so as to embrace the potato ridge along which they move during operation of the device.

GB—A—990568 discloses a root crop topping machine including a rotary cutter so mounted in a chassis as to be free to float in the chassis towards and away from the ground as it is towed over a row of root crop. The cutter comprises a number of crop-cutting blades arranged about and lying parallel to the rotation axis of the cutter and transversely of the direction of travel over the row. In operation, the cutter removes the stalk or leafy portion of the crop from the root portions, feelers being provided which are spaced from and so located under the cutter as to maintain the cutter a constant distance from the crop.

According to the present invention, a root crop topping assembly, including a rotary device having a number of cutter bars symmetrically disposed about the rotation axis of the device and adapted on rotation of the device to sweep out a generally cylindrical shape having a concave wall portion designed to remove surface material from exposed crowns of the crop, is characterised in that the cutter bars are skewed and/or shaped so as each to present a crown-cutting edge region at said concave wall portion during operation of the device thereby to leave on each crown a generally domed residue. Normally there will be six or more said bars, values of eight, or better, ten or more, currently being preferred. The invention also includes a rotary device for use in such an assembly.

Conveniently, the cutter bars are provided by substantially straight-edged bars skewed at between 30° and 60° to an imaginary reference plane lying perpendicular to the rotation axis of the device.

Alternatively, the cutter bars may lie substantially parallel to the rotation axis of the device and have their cutting edges shaped so as on rotation of the device to lie on said concave wall portion.

As a further alternative, the cutter bars may be skewed and the cutting edges of the bars shaped so as on rotation of the device to lie on said concave wall portion.

Conveniently, the cutter bars are twisted so as at all points to have the major cross-sectional dimension of each cutter bar radially disposed in the device.

Conveniently, the device has more than eight said cutter bars.

Conveniently, the device includes a root crop crown-sensing disc.

Conveniently, the assembly is adapted for bodily movement over soil containing a row of root crop, the rotary device being positioned so as in operation to engage the crop *in situ* to remove part of the exposed crowns of the crop and leave on each crown a generally domed residue.

The invention also includes a root crop harvester incorporating a topping assembly according to the present invention mounted on the frame of the harvester by means of a leading arm arrangement adapted to urge the assembly into the desired optimum crop-topping relationship.

Conveniently, but not necessarily, the root crop may be partially topped prior to engagement by the assembly of the present invention, e.g. by removing the bulk of the foliage with a preliminary topping device.

In the preferred arrangement, this device will sever the crown at a significantly higher level than is conventional for root crop harvesting. Typically, therefore, this device should not remove more than the top 10 mm of the crown and preferably not more than the top 7 mm (values in the range 2 to 5 mm being preferred).

There may also be occasions where it is desirable or even necessary to lift the root crop, e.g. sugar beet, without topping or after only the preliminary topping stage and to subsequently remove the outer surface material at a topping station after the lifting operation. It will be appreciated that some at least of the teachings of the present invention have application to the removal of material from such lifted root crop. Accordingly, in accordance with a second aspect of the present invention, there is provided a fixed-position root crop topping assembly which comprises conveying means for conveying harvested root crop through a topping station where a rotary device according to the present invention is adapted to engage the crop to remove part of the crowns and leave on each crown a generally domed residue. The previous description of the various preferred forms of rotary device etc. applies also to this aspect of the present invention. Conveniently, the rotary device in this case, may, for example, be one mounted for rotation about an axis which is substantially transverse to the direction of movement of the crop through the topping station.

Embodiments of the invention will now be described, by way of example only, with reference to the accompanying drawings in which:—

Figures 1 and 1*a* to 1*h* show perspective views of rotary devices for use in the topping assembly;

Figures 2 and 3 are schematic perspective and plan views of a harvester according to the present invention with only those elements pertinent to the present invention being illustrated;

Figure 4 shows a leading arm arrangement for mounting the topping assembly on a single-row root crop harvester such as that illustrated in Figures 2 and 3;

Figure 5 shows in simplified plan view the mounting arrangement for a multi-row harvester; and

Figure 6 shows a harvested beet which has been topped *in situ* by the topping assembly of the present invention.

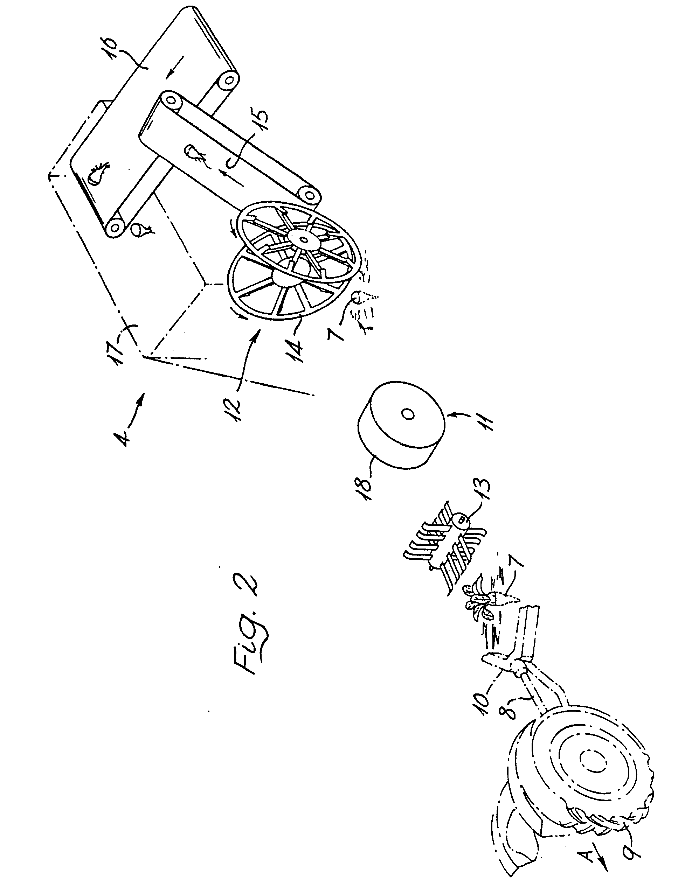

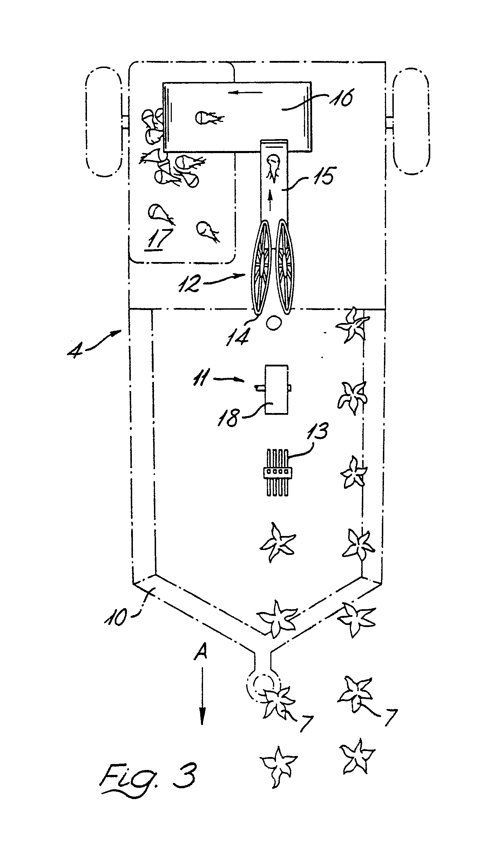

Referring first to Figures 2 and 3, a single-row root crop harvester 4 in accordance with a preferred embodiment of the present invention comprises a wheeled frame 10 supporting a beet topping assembly 11 and a beet lifting device 12. Reference numeral 18 indicates the crown-engaging rotary device of assembly 11.

The topping assembly 11 is preceded by a preliminary topping device in the form of a flail 13 positioned at the forward end of the assembly to remove leaf material. Ideally, it will leave about 50 mm of leaf stalk on the crowns.

In an alternative embodiment (not shown), the topping assembly 11 and lifting device 12 are spaced laterally apart from the flail 13 by an appropriate amount e.g. 500 mm, so that the flail operates on the preceding row (6) to that being topped and lifted.

The lifting device 12 is of conventional construction and comprises Maynard-type lifting wheels 14 adapted to lift the topped beet from the soil and deposit it on a conveyor 15. The beet is then passed to a conveyor 16 which conveys it to a hopper 17 for subsequent discharge from the harvester.

In the illustrated embodiment, device 18 and flail 13 are driven hydraulically but if desired they can instead be driven mechanically from the power take-off 8 of the towing vehicle 9.

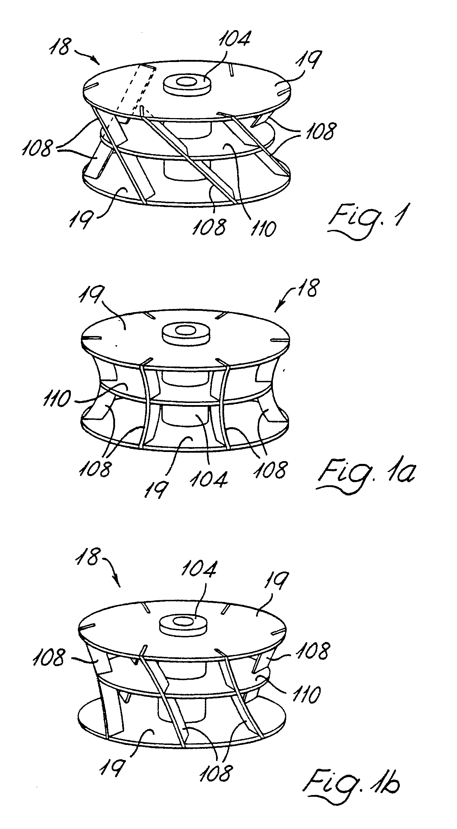

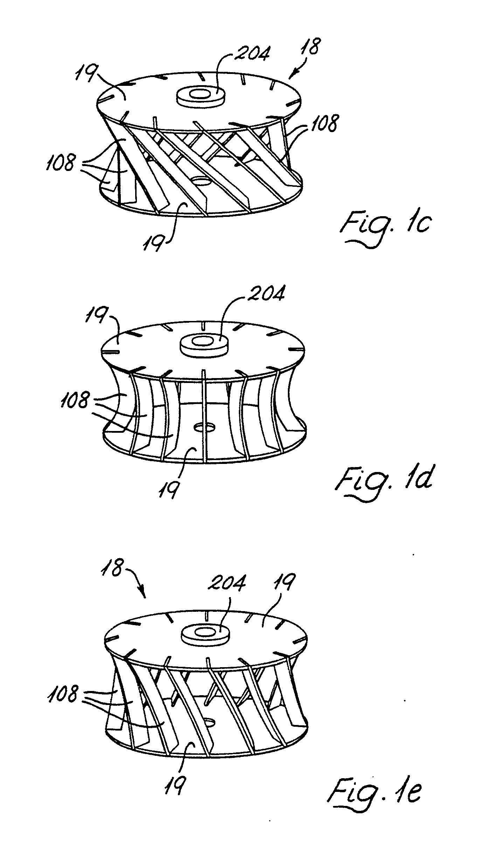

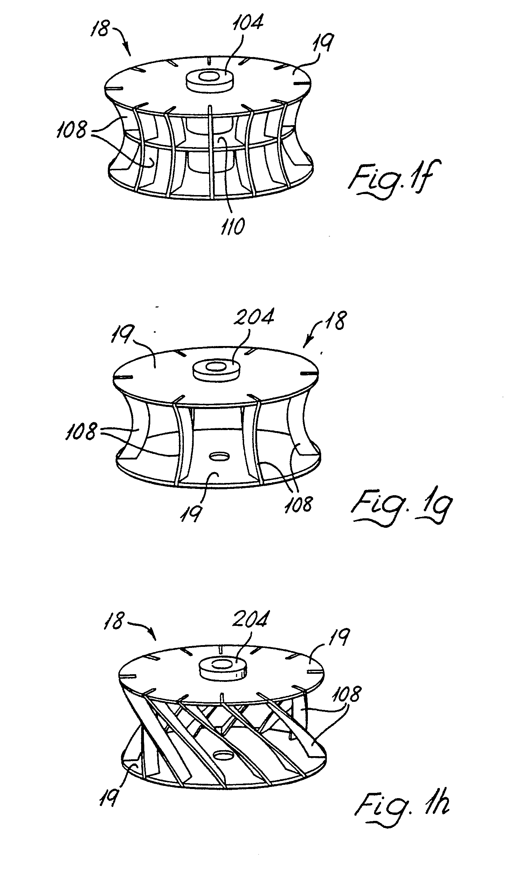

As will be seen from Figure 1, the device 18, shown diagrammatically in Figures 2 and 3, comprises two circular end plates 19 interconnected by a support tube 104 through which the threaded end of the shaft can be passed to carry a retaining nut acting on the inner face of the end plate concerned. Conveniently the tube 104 is also keyed to the shaft to help prevent any relative motion between the two items. As the unit is symmetrical, it can be mounted from either side so that wear on the cutter bars can be evened out.

In the embodiment illustrated, the diameter of end plates 19 is 300 mm and the crown-engaging part of the device is provided by the six cutter bars 108 welded at 45° to the end plates 19 and equally spaced about the rotation axis of the devices as shown. The centre points of the bars are interconnected by a smaller diameter crown-sensing plate 110, e.g. 260 mm diameter.

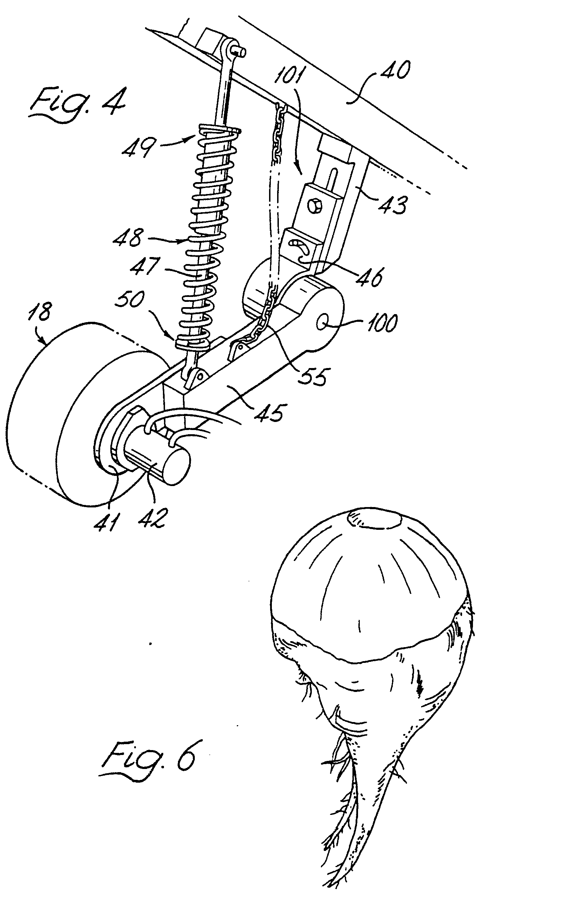

Figure 4 shows the preferred method of mounting a rotary device (18) on the frame 40 of a single-row harvester using a leading arm arrangement. Thus referring now to Figure 4, it will be seen that a bracket member 43 depending from the harvester frame 40 provides a pivotal support for the rear end of a leading arm 45 which is secured at its front end to an apertured mounting plate 41 for a hydraulic motor 42. On the other side of plate 41 is a rotary device 18 secured to the shaft of motor 42 in the manner above described with reference to Figure 1. Reference numeral 46 indicates an optional angle adjustment plate for the arm 45. In addition, vertical adjustment of the support pivot 100 is provided at 101 so that the position of the pivot can be set to correspond to the working depth of the lifting wheels 14.

The motion of arm 45 may be controlled by a damper 47 acting between arm 45 and the harvester frame 40 and/or by a compression spring 48 acting between stops 49, 50 on the two parts of the damper and embracing the damper 47. The purpose of spring 48 is to urge the rotary device 18 downwardly into skin-abrading engagement with the root crop crowns while that of damper 47 is to discourage "bounce" when the device rolls over the root crop crowns and similar irregularities in the soil profile. The arrangement is completed by a limit chain 55 provided to limit downward movement of the arm 45 to prevent device 18 digging itself into the ground. The advantage of a leading arm arrangement over a trailing arm arrangement is that it is an inherently stable configuration.

In use of the assembly above described for sugar beet topping, say, the harvester 4 is towed in direction A (Figures 2 and 3) over the sugar beet rows so that the flail 13, topping assembly 11 and lifting device 12 operate in succession as shown.

The speed of rotation of the rotary device 18 in assembly 11 will be chosen having regard to the translational speed of the harvester to leave a domed core of acceptable interior material. Typically, where the rotary device is a device 18 of about 300 mm diameter it would rotate at 750 to 800 rpm for a harvester moving at 3 to 5 km per hour. Higher rotational speeds of up to 1100 rpm can be used for greater harvester speeds of 6 to 8 km per hour.

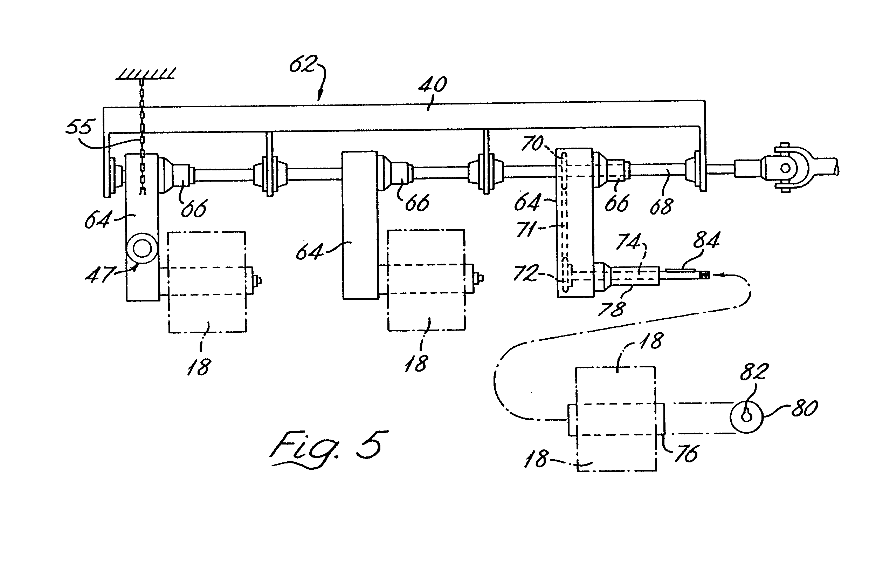

Figure 5 shows one way of mounting a number of single-row rotary devices 18 on the harvester frame 40 to provide a multi-row arrangement 62. Once again a leading arm assembly is used, this time with the arms 64 pivotally supported on bearings 66 from a common frame-supported shaft 68.

Each arm 64 takes the form of a hollow casing which houses a chain and sprocket connection 70, 71, 72 between shaft 68 and drive shafts 74 for the individual rotary devices 18. The end plates 19 of each rotary device as in this case welded to a drum 76 supported on a bearing 78 on the associated arm 64. Each drum 76 has an end plate 80 presenting a key way 82 arranged to register with a corresponding key 84 on the shaft 74. A retention nut (not shown) on the end of shaft 74 abuts with the end plate 80 to hold the device 18 in place.

As before, each leading arm has provision for a damper and/or spring and limit chain associated with it, though for clarity only the damper 47 and chain 55 for one of the arms has been shown and the spring mounted on that damper has been omitted.

It is intended that beet which has been topped by the topping assembly 11 should have the domed shape shown in Figure 6 of the drawings.

It will be appreciated that the harvesters according to the present invention are not restricted to the details particularly described above with reference to the drawings. In particular, flail 13 could be omitted or replaced by an alternative preliminary topper, such as a knife rotating about a substantially vertical axis. Similarly, an alternative lifting device could be employed.

As already indicated, Figures 1*a* and 1*b* illustrate alternative forms of rotary device to that shown in Figure 1 in so far as the skewed straight-edged cutter bars 108 of the Figure 1 embodiment are replaced by less skewed (Figure 1*b*) or axially parallel (Figure 1*a*) cutter bars having their cutting edges correspondingly shaped so as in each case, on rotation of the device, to lie on the same concave wall portion as that swept out by the cutting edges of bars 108 in the Figure 1 embodiment.

In the alternative embodiments of Figures 1*c* to 1*e* the crown-sensing disc 110 and support tube 104 of the earlier embodiments are omitted and the circular end plates of the device are interconnected by the cutting bars 108 which have been increased in number from six to twelve. At least one of the two end plates 19 carries a circular support plate 204 through which the threaded end of the shaft can be passed to carry a retaining nut acting on the inner face of the end plate concerned. Conveniently the plate 204 is also keyed to the shaft to help prevent any relative motion between the two items. As the unit is symmetrical, it can be mounted from either side so that wear on the cutter bars can be evened out.

In the embodiment illustrated, the diameter of end plates 19 is once again 300 mm but the crown-engaging part of the device is now provided by the twelve cutter bars 108 welded at 45° to the end plates 19 and equally spaced about the rotation axis of the devices as shown.

If desired, the embodiment of Figure 1*d* may be modified by having the centre points of the bars 108 interconnected by a smaller-diameter crown-sensing plate 110 as shown in Figure 1*f*. With the preferred dimensions quoted above for the earlier embodiments, the diameter of plate 110 would typically be 260 mm for example. The embodiments of Figures 1*c* and 1*e* may be similarly modified. In all such modifications, plates 204 are advantageously replaced by the support tube 104 of the first embodiments.

Another modification is shown in Figure 1*h* which depicts a rotary device 18 having the cutter bar configuration of Figure 1*c* but with each cutter bar twisted so as at all points to have its major cross-sectional dimension radially disposed in device 18. Twisting the cutter bars in this way ensures that the angle of attack is the same along the length of the bar. This is advantageous as it results in the wear on each cutter bar being spread more or less equally along the length of the cutting edge. It is therefore intended that all the other skewed-bar embodiments of the present invention may also incorporate this twist feature, in particular, though not exclusively, the embodiments and modifications shown in, and/or described with reference to, Figure 1, 1*b*, 1*e* and 1*g* (described below). In this latter respect, it will readily be appreciated that the illustrated embodiments and their modifications can be modified in exactly the same way as was the embodiment of Figure 1*c*, i.e. by replacing the essentially flat cutter bars shown in these figures by twisted radially-disposed cutter bars of the sort shown in Figure 1*h*.

Further modifications of the above described embodiments differ from those illustrated only by the number of cutter bars present, and/or by their inclination, and/or by the exact profile of their cutting edges, and/or by the presence or absence of a crown-sensing plate, and/or by the method in which the device is to be supported, and/or by the dimensions or relative dimensions of the different parts of the device. One such modification, already referred to above, is shown, by way of example only, in Figure 1*g* which depicts a rotary device 18 having the cutter bar configuration of Figure 1*a* and the support system of Figures 1*c* to 1*e* or 1*h*.

It will be understood that whether in the context of a root crop harvester or a topping assembly, the rotary device of Figure 1 can in each case be replaced by an equivalent device of the form illustrated in Figures 1*a* to 1*h* or in a modification of these forms as above described.

**Claims**

1. A root crop topping assembly including rotary device having a number of cutter bars symmetrically disposed above the rotation axis of the device and adapted on rotation of the device to sweep out a generally cylindrical shape having a concave wall portion designed to remove surface material from exposed crowns of the crop characterised in that the cutter bars are skewed and/or shaped so as each to present a crown-cutting edge region at said concave wall portion during operation of the device thereby to leave on each crown a generally domed residue.

2. An assembly as claimed in Claim 1 characterised in that the cutter bars are provided by substantially straight-edged bars skewed at between 30° and 60° to an imaginary reference plane lying perpendicular to the rotation axis of the device.

3. An assembly as claimed in Claim 1 characterised in that the cutter bars lie substantially parallel to the rotation axis of the device and have their cutting edges shaped so as on rotation of the device to lie on said concave wall portion.

4. An assembly as claimed in Claim 1 characterised in that the cutter bars are skewed and the cutting edges of the bars are shaped so as on rotation of the device to lie on said concave wall portion.

5. An assembly as claimed in Claim 2 or Claim 4 characterised in that the cutter bars are twisted so as at all points to have the major cross-sectional dimension of each cutter bar radially disposed in the device.

6. An assembly as claimed in any preceding claim characterised in that it has more than eight said cutter bars.

7. An assembly as claimed in any preceding claim characterised in that it includes a root crop crown-sensing disc.

8. An assembly as claimed in Claim 1 adapted for bodily movement over soil containing a row of root crop characterised in that the rotary device is positioned so as in operation to engage the crop in situ to remove part of the exposed crowns of the crop and leave on each crown a generally domed residue.

9. A root crop harvester incorporating a topping assembly according to Claim 8 characterised in that the assembly is mounted on the frame of the harvester by means of a leading arm arrangement adapted to urge the assembly into the desired optimum crop-topping relationship.

10. A root crop topping assembly as claimed in any of Claims 1 to 7 characterised in that the assembly is a fixed-position assembly which comprises conveying means for conveying harvested root crop through a topping station where the rotary device is adapted to engage the crop to remove part of the crowns of the crop and leave on each crown a generally domed residue.

## Patentansprüche

1. Vorrichtung zum Köpfen von Wurzelfrüchten, mit einer rotierenden Vorrichtung mit einer Vielzahl von Schneidstangen, die symmetrisch um die Drehachse der Vorrichtung angeordnet sind und die bei der Drehung der Vorrichtung eine im wesentlichen zylindrische Form mit einem konkaven Wandabschnitt überstreichen, um Oberflächenmaterial von ungeschützten Köpfen der Früchte zu entfernen, dadurch gekennzeichnet, daß die Schneidstangen schräg angeordnet und/oder so geformt sind, daß während des Betriebs der Vorrichtung jede einen Kantenbereich zum Schneiden der Köpfe an dem konkaven Wandabschnitt aufweist, um an jedem Kopf einen im wesentlichen gewölbten Rest zu belassen.

2. Vorrichtung nach Anspruch 1, dadurch gekennzeichnet, daß die Schneidstangen im wesentlichen Stangen mit geraden Kanten sind, die schräg unter einem Winkel zwischen 30° und 60° zu einer imaginären Bezugsebene angeordnet sind, die senkrecht zu der Drehachse der Vorrichtung liegt.

3. Vorrichtung nach Anspruch 1, dadurch gekennzeichnet, daß die Schneidstangen im wesentlichen parallel zur Drehachse der Vorrichtung liegen, und daß die Schneidkanten derart ausgebildet sind, daß sie bei der Drehung der Vorrichtung auf dem konkaven Wandabschnitt liegen.

4. Vorrichtung nach Anspruch 1, dadurch gekennzeichnet, daß die Schneidstangen schräg angeordnet sind, und daß die Schneidkanten der Stangen derart ausgebildet sind, daß sie bei Drehung der Vorrichtung auf dem konkaven Wandabschnitt liegen.

5. Vorrichtung nach Anspruch 2 oder 4, dadurch gekennzeichnet, daß die Schneidstangen verdreht sind, so daß an allen Punkten die Hauptquerschnittserstreckung jeder Schneidstange radial in der Vorrichtung verläuft.

6. Vorrichtung nach einem der vorhergehenden Ansprüche, dadurch gekennzeichnet, daß mehr als acht Schneidstangen angeordnet sind.

7. Vorrichtung nach einem der vorhergehenden Ansprüche, dadurch gekennzeichnet, daß eine Scheibe zum Abtasten des Kopfes der Wurzelfrüchte vorgesehen ist.

8. Vorrichtung nach Anspruch 1, ausgebildet zur Bewegung über den Boden, der eine Reihe von Wurzelfrüchten aufweist, dadurch gekennzeichnet, daß die Drehvorrichtung derart angeordnet ist, daß sie im Betrieb die Früchte in situ ergreift, um Teile der ungeschützten Köpfe der Früchte zu entfernen und an jedem Kopf einen im wesentlichen gewölbten Rest zu belassen.

9. Erntemaschine für Wurzelfrüchte mit einer Köpfvorrichtung nach Anspruch 8, dadurch gekennzeichnet, daß die Vorrichtung über einen Führungsarm auf dem Rahmen der Erntemaschine angeordnet ist, mit welchem die Vorrichtung in die gewünschte optimale Lage zum Köpfen der Erntefrüchte gebracht werden kann.

10. Vorrichtung zum Köpfen von Wurzelfrüchten, nach einem der Ansprüche 1 bis 7, dadurch gekennzeichnet, daß die Vorrichtung eine feststehende Vorrichtung ist, welche eine Fördereinrichtung zum Fördern geernteter Wurzelfrüchte durch eine Köpfstation aufweist, in welcher die Drehvorrichtung vorgesehen ist zum Ergreifen der Erntefrüchte, um ein Teil der Köpfe der Erntefrüchte zu entfernen und an jedem Kopf einen im wesentlichen gewölbten Rest zu belassen.

## Revendications

1. Ensemble d'étêtage des plantes sarclées comprenant un dispositif rotatif présentant plusieurs barres de coupe disposées symétriquement autour de l'axe de rotation du dispositif, et adapté pour balayer lors de la rotation du dispositif une forme sensiblement cylindrique à paroi concave conçue pour retirer la partie superficielle des têtes exposées des plantes, caractérisé en ce que les barres de coupe sont inclinées et/ou conformées de façon à présenter une zone tranchante d'étêtage sur ladite paroi concave lors du fonctionnement du dispositif de façon à laisser un résidu sensiblement bombé sur chacune desdites têtes de plantes.

2. Ensemble tel que revendiqué en revendication 1, caractérisé en ce que les barres de coupe sont des barres essentiellement à bord droit inclinées de 30° à 60° par rapport à un plan imaginaire de référence s'étendant perpendiculairement à l'axe de rotation du dispositif.

3. Ensemble tel que revendiqué en revendication 1, caractérisé en ce que les barres de coupe s'étendent environ parallèlement à l'axe de rotation du dispositif, et présentent des bords de coupe conformés de façon qu'ils balayent ladite paroi concave lors de la rotation du dispositif.

4. Ensemble tel que revendiqué en revendication 1, caractérisé en ce que les barres de coupe sont inclinées, et que les bords de coupe des barres sont conformés de façon qu'ils balayent ladite paroi concave lors de la rotation du dispositif.

5. Ensemble tel que revendiqué en revendication 2 ou en revendication 4, caractérisé en ce que les barres de coupe sont gauchies de façon à présenter en tout point la même dimension principale en section pour chaque barre de coupe disposée radialement dans le dispositif.

6. Ensemble tel que revendiqué dans une quelconque des revendications précédentes, caractérisé en ce qu'il comporte plus de huit dites barres de coupe.

7. Ensemble tel que revendiqué dans l'une quelconque des revendications précédentes caractérisé en ce qu'il comprend un disque de palpage des têtes des plantes sarclées.

8. Ensemble tel que revendiqué en revendication 1, adapté pour se déplacer en bloc au-dessus d'un sol contenant un rang de plantes sarclées, caractérisé en ce que le dispositif rotatif est placé de façon à venir en contact des plantes *in situ*, lors du fonctionnement, afin de retirer une partie des têtes exposées des plantes et de laisser un résidu sensiblement bombé sur chaque tête.

9. Récolteuse de plantes sarclées, comprenant un ensemble d'étêtage selon la revendications 8, caractérisée en ce que l'ensemble est monté sur le cadre de la récolteuse au moyen d'un bras avant conçu pour appliquer l'ensemble en contact optimal souhaité avec les plantes.

10. Ensemble d'étêtages de plantes sarclées tel que revendiqué dans l'une quelconque des revendications 1 à 7, caractérisé en ce que ledit ensemble est un ensemble fixe comprenant des moyens transporteurs acheminant les plantes sarclées récoltées à travers un poste d'étêtage où le dispositif rotatif est placé pour venir en contact avec les plantes et retirer une partie des têtes des plantes en laissant sur chaque tête un résidu sensiblement bombé.

Fig. 1

Fig. 1a

Fig. 1b

Fig. 1c

Fig. 1d

Fig. 1e

*Fig.1f*

*Fig.1g*

*Fig.1h*

Fig. 2

0 106 420

Fig. 3

Fig. 4

Fig. 6

Fig. 5

0 106 420